# EUROPÄISCHE PATENTSCHRIFT

(11) **EP 2 034 668 B1**
(45) Veröffentlichungstag und Bekanntmachung des Hinweises auf die Patenterteilung: **29.12.2010**
(21) Anmeldenummer: 07017367.9
(22) Anmeldetag: 05.09.2007
(51) Int. Cl.: H04L 12/437, H04L 12/40, H04L 29/14, G05B 19/00

(54) **Hochverfügbares Kommunikationssystem**
High availability communications system
Système de communication hautement disponible

(43) Veröffentlichungstag der Anmeldung: 11.03.2009
(73) Patentinhaber: SIEMENS AKTIENGESELLSCHAFT, 80333 München (DE)
(72) Erfinder: Barthel, Herbert, 91074 Herzogenaurach (DE); Griessbaum, Reiner, 76761 Rülzheim (DE); Ramm, Enrico, 09117 Chemnitz (DE); Steindl, Günter, 92284 Poppenricht (DE)

(56) Entgegenhaltungen:
- US-A1- 2002 046 357

## Beschreibung

Die Erfindung betrifft ein Kommunikationssystem zur zuverlässigen Kommunikation zwischen Kommunikationsteilnehmern sowie ein Verfahren zur zuverlässigen Kommunikation zwischen Kommunikationsteilnehmern.

In Systemen, in denen die einzelnen Kommunikationsteilnehmer wichtige Funktionen ausüben und in denen die zwischen den Kommunikationsteilnehmern stattfindende Kommunikation unterbrechungsfrei ausgeführt werden muss, werden in der Regel redundant ausgelegte Kommunikationskanäle verwendet, so dass auch bei Ausfall eines Kanals auf dem entsprechend anderen Kanal zwischen Kommunikationsteilnehmern eine Datenübertragung stattfinden kann. Bei den Kommunikationsteilnehmern an sich kann es sich beispielsweise um Feldgeräte oder Steuerungen in einem Automatisierungssystem handeln. Hierbei wird die Kommunikationsverbindung zwischen der zentralen Steuerung und den Feldgeräten in der Regel als Feldbus bezeichnet. Feldbuskomponenten, also die Kommunikationsteilnehmer, sind dabei z.B. Feldbus-Controller, Feldbus-Devices, Switches, Router, Kabel sowie WLAN-Strecken. Als Kommunikationsteilnehmer sind außerhalb eines Automatisierungssystems, beispielsweise im Rahmen eines Überwachungssystems, z.B. einer Gebäudeüberwachung oder auch einer Flugverkehrüberwachung, andere Komponenten, die an die Stelle der Steuerung und die Feldgeräte treten, denkbar. Beispielsweise können sicherheitsgerichtete Kameras zur Überwachung von öffentlichen Räumen als Kommunikationsteilnehmer ihre Daten ebenso über sichere Kommunikationskanäle versenden.

In der Regel werden in einem derartigen Automatisierungssystem bzw. Überwachungssystem die zuverlässigkeitsrelevanten Komponenten bzw. die Kommunikationsteilnehmer redundant, d.h. mindestens doppelt, ausgelegt, so dass bei Ausfall einer entsprechenden Komponente bzw. eines Kommunikationsteilnehmers der redundante Partner für den ausgefallenen Kommunikationsteilnehmer einspringen kann. Durch die redundante Auslegung der zuverlässigkeitsrelevanten Komponenten und durch die zweikanalige Auslegung der Kommunikationsverbindung wird sichergestellt, dass immer ein Reserve-Kommunikationsweg bereitgestellt werden kann, über den die beteiligten sicherheitsgerichteten Komponenten zuverlässig kommunizieren können. Das heißt, dass bei allen Störungen, die im Rahmen des Automatisierungs- oder Überwachungssystems auftreten können, die Kommunikation über einen Reserve-Weg ohne Unterbrechung weitergeführt werden kann.

Im Rahmen bisheriger Lösungen gibt es mehrere Möglichkeiten, die Kommunikation bei Störung aufrechtzuerhalten. Beispielsweise kann in einem System wie Profibus-DP eine Systemredundanz derart realisiert sein, dass es zwischen den beteiligten Komponenten zwei physikalische Verbindungen gibt. Solange beide Kommunikationskanäle intakt sind, ist hierbei eine der beiden Verbindungen der Vorzugskanal bzw. Primärkanal, die andere Verbindung fungiert als Reserve-Kanal bzw. Backup-Kanal. Hierbei werden über beide Kanäle Daten zwischen den Kommunikationsteilnehmern versendet, es sind jedoch nur die Daten des Vorzugskanals zur Auswertung durch die angeschlossenen Komponenten gültig. Auf dem Reserve-Kanal laufen jedoch auch Datentelegramme, um ständig die Verbindung zu testen. Wenn bei dem System beispielsweise ein Feldbus-Controller im Vorzugskanal eine Kommunikationsstörung zu einem Feldbus-Device entdeckt, sendet der Feldbus-Controller auf der Reserve-Verbindung ein spezielles Umschalttelegramm, welches dem Feldbus-Device mitteilt, auf den entsprechenden Reserve-Kanal umzuschalten und diesen somit anschließend als Vorzugskanal zu verwenden. Hierbei ist jedoch von Nachteil, dass die Umschalt-Telegramme, die bei Feststellung der Störung versendet werden, asynchron zu den zyklischen Nutzdaten übertragen werden und somit sind zusätzliche Maßnahmen erforderlich, wie beispielsweise das Einfügen einer Wartezeit bzw. einer Verzögerungszeit, um einen so genannten Umschaltstoß zu verhindern. Hierbei wird unter einem Umschaltstoß verstanden, dass bedingt durch die Umschaltung Daten eines älteren als des zuletzt empfangenen Applikationszyklus vom Datenempfänger übernommen werden. Ein derartiger fehlerhafter Empfang würde zwar als Fehler erkannt werden, es würde jedoch bei gleichzeitiger Verwendung eines Sicherheitsprotokolls eine Sicherheitsreaktion eingeleitet, beispielsweise das Abschalten der Anlage, was durch eine so genannte stoßfreie Umschaltung vermieden werden sollte. Insbesondere für redundanten Verbindungen mit gravierend unterschiedlicher Laufzeit, bei denen die redundant ausgelegten Komponenten im Rahmen der Netzwerktopologie also weit auseinander liegen bzw. an unterschiedlichen Stellen des Netzes angesiedelt sind, so dass die Datentelegramme eine stark unterschiedliche Laufzeit benötigen, um von einem entsprechenden Sender an die redundanten Komponenten gesendet zu werden, ist eine derartige Lösung nicht geeignet, da das Umschalt-Telegramm die redundanten Partner unter Umständen zu einer Zeit erreicht, die zwischen den redundanten Partnern stark differiert. Daher muss eine entsprechende Verzögerungszeit eingeführt werden, um eine korrekte Umschaltung zwischen dem Vorzugskanal und dem Reserve-Kanal zu gewährleisten.

Bei einem weiteren System, dem Profibus-DP mit Flying Redundanz kann es eine oder zwei physikalische Verbindungen zur Kommunikation geben. Hierbei kann der Feldbus von einem oder zwei Feldbus-Controllern bedient werden. Die Feldbus-Devices können ein oder zwei Schnittstellen zum Feldbus haben. Grundeigenschaft ist jedoch, dass es logisch nur einen Feldbus gibt, egal, über wie viele Kabel die Kommunikation abläuft. Prinzipiell sind alle Komponenten miteinander verbunden. Auch hier gibt es wie oben bereits beschrieben einen Vorzugs- und einen Reserve-Kanal mit den gleichen Prinzipien, nur dass diese sich einen logischen Feldbus teilen. Bei der Flying Redundanz werden bei jeder Umschaltung am Feldbus-Device automatisch die Feldbus-Teilnehmeradressen getauscht. Der Vorzugs-Kanal ist hierbei immer eine Verbindung zwischen einem Feldbus-Controller und einer festen Adresse am Feldbus-Device, egal welches der beiden Interfaces die Adresse gerade hat. Der Reserve-Kanal besteht zwischen dem Feldbus-Controller und einem Feldbus-Interface mit der Adresse des Vorzugskanals, die um einen festen Offset erhöht ist. Hierbei ist der Nachteil ebenfalls, dass für eine Umschaltung zwischen dem Vorzugskanal und dem Reserve-Kanal Umschalt-Telegramme notwendig sind, die asynchron zu den zyklischen Nutzdaten übertragen werden.

Bei der Verwendung von Ethernet gibt es ebenfalls zwei physikalische Verbindungen, bei denen auch über beide kommuniziert wird. Hierbei werden alle Telegramme nummeriert. Die Telegramme mit der neueren Nummer werden übernommen. Dieses Verfahren hat den Nachteil, dass es sehr aufwändig ist und es erfordert eine enge Kopplung zwischen den beiden redundant ausgelegten Empfängern, da die Telegrammnummern ständig verglichen werden müssen, um zu entscheiden, welches das aktuellste und somit das zu verwendende Datentelegramm ist. Eine derartige Architektur bzw. dieses Verfahren kann nur angewendet werden, wenn die entsprechenden Kommunikationsteilnehmer, also beispielsweise die Feldbus-Controller, sehr eng beieinander liegen (<1 m) und über eine eigene Kommunikationsverbindung verfügen. Ein derartiges Verfahren ist aber beispielsweise bei räumlich stark verteilten Systemen ungeeignet, in denen die redundanten Komponenten, beispielsweise die Steuerungen in einem Automatisierungssystem weit auseinander liegen, und damit der Abstand zwischen den redundanten Feldbus-Controllern größer als 1000m betragen kann. Zudem würden in einem derartigen Fall die Feldbus-Controller keine eigene Kommunikationsverbindung aufweisen können, über die dann der Nummernvergleich erfolgen kann.

Das Dokument US 2002/046 357 offenbart ein Kommunikationssystem gemäß des Oberbegriffs des Anspruchs 1 und ein Verfahren gemäß des Oberbegriffs des Anspruchs 11.

Die Aufgabe der vorliegenden Erfindung besteht daher darin, ein Kommunikationssystem und ein entsprechendes Verfahren anzugeben, bei dem in einem mehrkanalig ausgelegten Kommunikationssystem ein stoßfreies Umschalten zwischen dem Primär-Kanal und einem oder mehreren Backup-Kanälen ermöglicht wird.

Die Aufgabe wird gelöst durch ein Kommunikationssystem gemäß Anspruchs 1 und ein Verfahren gemäß Anspruchs 11. Die abhängige Ansprüche 2-10 und 2-21 entsprechen Ausführungsbeispiele der Erfindung.

Der Erfindung liegt die Erkenntnis zugrunde, dass in einem mehrkanalig ausgebildeten Kommunikationssystem, in dem zu jeder Zeit eindeutig klar sein muss, welcher von beispielsweise vier Kommunikationskanälen der Primärkanal und welche Reserve- bzw. Backup-Kanäle sind, die Umschaltung zwischen den Kanälen möglichst aufwandsarm und immer stoßfrei erfolgen muss. Hierbei wird unter stoßfrei verstanden, dass von einem Kommunikationsteilnehmer bzw. von einer Komponente im Rahmen des Kommunikationssystems immer die Daten des letzten Applikationszyklus auch als solche über den entsprechenden Kanal empfangen werden und nicht etwa ältere Daten an das Gerät bzw. die Komponente versendet werden und von ihr ausgewertet werden. Insbesondere nutzt die vorliegende Erfindung die Möglichkeit, den beteiligten Komponenten im Kommunikationssystem auf einfache Weise mitzuteilen, welcher der Kanäle, über die sie senden bzw. empfangen, als Primär- bzw. als Backup-Kanal verwendet wird. Hierzu wird einfach im Zusammenhang mit den ohnehin in Form von Telegrammen übermittelten Nutzdaten der Status des Kanals angezeigt. Hierbei wird erfindungsgemäß dem Nutzdatentelegramm, welches beispielsweise von einem Feldbus-Controller an ein entsprechendes Feldgerät bzw. Feldbus-Device gesendet wird, die Statusinformation einfach angehängt. Der Status im Nutzdatentelegramm wird dann erfindungsgemäß umgeschaltet. Diese Statusänderung bei Versenden des Nutzdatentelegramms wird vom System genutzt, um auf einfache Weise die Auswahl der relevanten Daten zu ermöglichen. Es muss von den Kommunikationsteilnehmern, bzw. den Empfängern nur nach dem Statuswechsel "gelauscht" werden. Bei der Auswertung des Nutzdatentelegrammes kann das entsprechende Feldgerät somit gleichzeitig ermitteln, ob das Datentelegramm über den Primär- bzw. den Backup-Kanal gesendet wurde.

Eine zusätzliche Versendung von Umschalt-Telegrammen bzw. ein Vergleich der entsprechenden Nummern, die den Telegrammen im Stand der Technik angehängt wurden, um die Aktualität des Datentelegramms zu signalisieren, erübrigt sich bei der Vorgehensweise, wie sie im Rahmen der Erfindung vorgeschlagen wird. Die Nutzdatentelegramme können somit einfach ausgewertet werden, und die Statusinformation kann beispielsweise über beliebig viele redundante Kanäle versendet werden.

Um im Rahmen der vorliegenden Erfindung sicherzustellen, dass beispielsweise nicht mehrere Kanäle als Primärkanäle erkannt werden, weil über sie Telegramme versendet werden, die den Status eine Primärkanals anzeigen, wird vorgeschlagen, dass von den Empfängern bzw. den Kommunikationsteilnehmern genau der Kanal als Primärkanal angenommen wird, über den das letzte Nutzdatentelegramm mit einer Statusänderung, die signalisiert, dass es sich bei ihm um einen Primärkanal handelt, empfangen wurde. Es führt somit zur Entscheidung, welcher Kanal wirklich als Primärkanal angenommen werden soll, das Verfahren "der Letzte gewinnt" herangezogen. Das heißt, derjenige Kanal mit dem letzten Flankenwechsel von Backup auf Primary in der Statusanzeige, gilt auch als Primärkanal. Hierdurch wird erreicht, dass bei beliebig vielen Kanälen eine Eindeutigkeit erzielt wird, wobei vorausgesetzt wird, dass eine vorgesehene Zeit zwischen einer Umschaltung und dem Zurückschalten liegen muss. Somit ist gewährleistet, dass ein Kanal der gerade Backup geworden ist - wegen eines Fehlers in diesem Kanal - nicht sofort wieder Primary werden kann. Bei einer 4-kanaligen Verbindung kann beispielsweise immer schnell weiter auf einen anderen intakten Kanal geschaltet werden.

Eine weitere vorteilhafte Ausbildung der Erfindung ist dadurch gekennzeichnet, dass als Statusanzeige im Nutzdatentelegramm ein Bit vorgesehen ist. Hierdurch wird das Nutzdatentelegramm nicht wesentlich vergrößert. Das einfache Anhängen eines Bits reicht aus, um den beteiligten Kommunikationsteilnehmern den Status des entsprechenden Kanals, über den das Nutzdatentelegramm versendet wurde, zu ermitteln. Bei der Information, ob es sich um ein Primär- oder einen Backup-Kanal handelt, sind ohnehin nur zwei Zustände möglich, und diese können mit Hilfe eines Bits eindeutig an die Kommunikationsteilnehmer übermittelt werden. Vorteilhafterweise wird beispielsweise der Status des Primärkanals über eine 1 und der Status des Backup-Kanals mittels einer 0 angezeigt.

Eine weitere vorteilhafte Ausbildung der Erfindung ist dadurch gekennzeichnet, dass alle Kommunikationsteilnehmer zum Senden und Empfangen von Nutzdatentelegrammen vorgesehen sind. Hierdurch können von allen Kommunikationsteilnehmern Störungen, die erkannt werden, im Rahmen des Netzes kommuniziert werden und von allen Kommunikationsteilnehmern ausgehend kann beispielsweise eine Umschaltung der Kommunikationskanäle mit Hilfe des beschriebenen Verfahrens erfolgen. Der Vorteil hierbei ist, dass egal wo die Störung auftritt, sie unmittelbar erkannt werden kann und die Umschaltung auf den redundanten Kommunikationskanal angestoßen werden kann.

Eine weitere vorteilhafte Ausbildung der Erfindung ist dadurch gekennzeichnet, dass bei einem Sender eines Nutzdatentelegramms die Änderung des Status vom Primärkanal zum Backup-Kanal ohne Verzögerung vorgesehen ist. Dies ist von Vorteil, da eine im Sender erkannte Störung, (z.B. Empfangsseite diese Kanals ist gestört), sofort zu einer Umschaltung des Kanals führt, so dass die Datenempfänger, sobald sie das entsprechende Nutzdatentelegramm mit der geänderten Statusinformation erhalten, sofort wissen, dass der entsprechende Kanal nunmehr lediglich Backup-Kanal ist und die über diesen Kanal versendeten Daten nicht ausgewertet bzw. weiterverwendet werden dürfen. Die Umschaltinformation wird somit allen beteiligten Datenempfängern sofort und ohne weitere Verzögerung mitgeteilt.

Für den Fall, dass nur die Feldbus-Controller bzw. die redundanten CPUs bestimmen welcher der Kanäle Primär-Kanal sein soll, ist eine weitere vorteilhafte Ausbildung der Erfindung dadurch gekennzeichnet, dass der Empfänger (hier Feldbus-Device) eines Nutzdatentelegramms derart ausgebildet ist, dass er den Ausfall eines Primärkanals erkennt (den der Sender - hier Feldbus-Controller - bisher nicht erkannt hat, da es ein Ausfall ist, der nur eine Kommunikationsrichtung betrifft) und dann, wenn er Datentelegramme zurücksendet den Status seines Primärkanals unmittelbar auf Backupkanal umschaltet. Hierdurch wird gewährleistet, dass der Sender den Kanalausfall, anhand der der Primär nach Backup-Umschaltung, schnell registriert und eine Kanalumschaltung einleitet.

Eine weitere vorteilhafte Ausbildung der Erfindung ist dadurch gekennzeichnet, dass bei einem Sender von zyklischen Nutzdatentelegrammen die Änderung des Status vom Backup-Kanal zum Primärkanal erst erfolgt, wenn der Sender seine Nutzdaten komplett aktualisiert hat. Diese Ausbildung der Erfindung ist insbesondere von Vorteil, wenn beispielsweise ein Feldbus-Controller bei zyklischer Kommunikation erst von einem angeschlossenen Host, beispielsweise einer speicherprogrammierbaren Steuerung, die Daten in einem vollständigen Zyklus sammeln muss, bevor er sein entsprechendes Nutzdatentelegramm zusammenstellen kann und dieses anschließend über das Kommunikationssystem an die Empfänger, beispielsweise die Feldgeräte, versenden kann. Würde der Sender in einem solchen Fall sofort von Backup- auf Primärkanal umschalten, so würden unter Umständen die Daten eines Zyklus im Feldbus-Controller inkonsistent sein. Um dies zu vermeiden, wird vom Feldbus-Controller so lange gewartet, bis das komplette Nutzdatentelegramm zusammengestellt ist und erst danach wird von dem Feldbus-Controller als Datensender von Backup-Kanal auf Primärkanal umgeschaltet. Somit wird erst ein komplettes Nutzdatentelegramm zusammengestellt, diesem wird dann der entsprechende Status Primärkanal im Status Bit zugewiesen und anschließend wird dieses Nutzdatentelegramm mit der Primärkanalinformation versendet.

Eine alternative Ausbildung der Erfindung ist dadurch gekennzeichnet, dass der Sender von Nutzdaten diese nicht über eine kompletten Zyklus sammelt, um sie anschließend an die Empfänger zu senden, sondern dass die Nutzdaten gesendet werden, sobald sie anfallen und der Empfänger den Kanal erst umschaltet, wenn alle Daten angekommen sind und das letzte Nutzdatentelegramm den Status Primary hat.

Eine weitere vorteilhafte Ausbildung der Erfindung ist dadurch gekennzeichnet, dass die Kommunikationsteilnehmer zur Speicherung des letzten Nutzdatentelegramms, das über einen Primärkanal empfangen wurde, vorgesehen sind, wenn alle Kanäle des Status Backup-Kanal aufweisen. Es wird für die Speicherung der Nutzdatentelegramme eine vordefinierte Zeit vorgesehen und nach Ablauf der Zeit wird eine vordefinierte Reaktion der Kommunikationsteilnehmer vorgesehen. Die Ausführungsform hat insbesondere den Vorteil, dass in einem Fall, in dem Fall, in dem alle Kanäle des Kommunikationssystems Backup-Status anzeigen, die aktuellsten Nutzdatentelegramme, die über den letzten Primärkanal an die Kommunikationsteilnehmer gesendet wurden, eingefroren werden. Hierbei kann eine Haltezeit definiert werden, während derer die Kommunikationsteilnehmer bzw. die Komponenten die Daten speichern. Wenn die Komponenten während dieser Haltezeit wieder Nutzdatentelegramme erhalten, die ein Kanal als Primärkanal anzeigen, dann kann das System weiterlaufen, im anderen Fall wird nach abgelaufener Zeit beispielsweise eine vorher definierte Reaktion ausgelöst, beispielsweise werden alle Daten auf Null gesetzt und die entsprechenden Aktivitäten der Komponenten werden eingestellt bzw. die Anlage geht in einen Nothalt-Status.

Eine weitere vorteilhafte Ausbildung des Systems ist dadurch gekennzeichnet, dass die Kommunikationsteilnehmer mindestens zweifach redundant ausgelegt sind. Um eine optimale Funktionalität des hochverfügbaren Systems zu gewährleisten, ist es vorteilhaft, wenn alle beteiligten Komponenten redundant sind, d.h. wenn in jedem Fall ein redundantes Gerät bei Ausfall seines Partners die entsprechende Funktion übernehmen kann.

Eine weitere vorteilhafte Ausbildung der Erfindung ist dadurch gekennzeichnet, dass ein redundant ausgebildeter Sender eines Nutzdatentelegramms derart ausgebildet ist, dass er den Ausfall seines redundanten Kommunikationsteilnehmers erkennt und den Status seines Kanals auf Primärkanal umschaltet. Hierdurch wird gewährleistet, dass nicht nur ein aktives Umschalten zwischen den Kanälen im Rahmen eines kompletten funktionierenden Systems möglich wird, sondern dass auch im Rahmen eines kompletten Ausfalls, beispielsweise eines Feldbus-Controllers, dieser Ausfall sofort von seinem Partner erkannt werden kann und dass der Partner dann entsprechend seinen Kommunikationskanal auf Primärstatus wechseln kann.

Eine weitere vorteilhafte Ausbildung der Erfindung ist dadurch gekennzeichnet, dass die Kommunikationsteilnehmerkomponenten eines sicherheitsgerichteten Systems, insbesondere eines Automatisierungssystems oder eines Überwachungssystems, sind. Insbesondere im sicherheitsgerichteten Umfeld, ist die Hochverfügbarkeit aller Komponenten und die Sicherheit der entsprechenden Datenübertragung von besonderer Notwendigkeit. Es muss zu jedem Zeitpunkt sichergestellt werden, dass die beteiligten Komponenten im System die richtigen Daten empfangen und mit den richtigen Daten arbeiten. Dies gilt sowohl im Automatisierungsbereich als auch im Bereich sicherheitsgerichteter Überwachungssysteme.

Die vorliegende Erfindung hat insbesondere die Vorteile, dass für beliebig viele zueinander redundante Kanäle ein derartiges Kommunikationssystem bzw. Verfahren anwendbar ist, da der Koordinierungsaufwand nur linear mit der Anzahl der redundanten Kanäle wächst. Da keine unnötigen Wartezeiten notwendig sind, um einen Umschaltstoß zu vermeiden, sind kurze Umschaltzeiten zwischen den Kommunikationskanälen möglich. Die vorgeschlagene Lösung ermöglicht auch bei gravierend unterschiedlichen Nutzdatenlaufzeiten bzw. Telegrammlaufzeiten der zueinander redundanten Kanäle eine stoßfreie Umschaltung, da jederzeit von jedem Teilnehmer erkannt werden kann, welcher der für das letzte Datentelegramm relevante Primärkanal ist.

Durch die unterschiedliche Umschaltung von Primär auf Backup bzw. Backup auf Primär der beteiligten Sender ist eine Anwendung auch für zyklische Kommunikation wie Realtime-Ethernet möglich. Dadurch, dass sichergestellt wird, dass bei einem Sender, welcher von Backup auf Primär umschalten soll, erst die internen Daten für das Nutzdatentelegramm in einem Zyklus zusammengestellt werden, bevor der Kanal von Backup auf Primär umgeschaltet wird, wird sichergestellt, dass die vollständigen Nutzdaten versendet werden.

Durch die einfache Realisierung, den Status des Kanals mittels eines Bits anzuzeigen, ist eine Ressourcen schonende Möglichkeit vorgeschlagen, die zuverlässige bzw. hochverfügbare Kommunikation in dem redundanten System zu gewährleisten. Im Sender wird einfach ein Bit an das Telegramm angefügt, welches dann als Flanke vom Empfänger ausgewertet wird. Diese Einfachheit ist insbesondere wichtig, da das System auch in nicht redundanten Geräten die mit redundanten Geräten hochverfügbar (mehrkanalig) kommunizieren umsetzbar sein soll. Ein nicht redundantes Gerät erkennt dann trotzdem, über welchen Kanal es empfangen, also seine letzten Nutzdaten verwerten soll bzw. über welchen Kanal es die aktuellen Nutzdaten versenden soll.

Im Gegensatz zum Stand der Technik, bei dem die aktuellsten Telegramme mit Hilfe von Nummern markiert werden und ein entsprechender Vergleich der Nummern stattfinden muss, muss im Rahmen der vorliegenden Erfindung kein Telegrammnummernüberlauf verwaltet werden. Des Weiteren werden mit Hilfe des vorliegenden Systems nicht nur Störungen und Ausfälle der eigentlichen Kommunikationsstrecke beherrscht, sondern auch der Ausfall der Kommunikations-Anschaltung, beispielsweise eines Feldbus-Controllers, wird beherrscht.

Des Weiteren kann die Lösung in beliebiger Kommunikationsschicht implementiert werden. Besonders vorteilhaft ist hierbei, dass sie auch in der höchsten Kommunikationsschicht implementiert werden kann: Der redundante Host, beispielsweise die speicherprogrammierbare Steuerung, kann die Koordinierung (Primärkanal - Backup-Kanal) der zueinander redundanten Kanäle übernehmen. Es ist keine zusätzliche Kommunikationsverbindung zwischen den redundanten Feldbus-Controllern notwendig. Mit der vorliegenden Lösung können somit alle Kommunikationsstörungen stoßfrei beherrscht werden.

Zusätzlich ist die Lösung unabhängig von der Telegrammlaufzeit, die sich zwischen den redundanten Kanälen gravierend unterscheiden kann, beispielsweise bei diversitären Verbindungen zwischen den Kommunikationsteilnehmern.

Für die Implementierung der Lösung wird die Tatsache zunutze gemacht, dass es aus Verfügbarkeitssicht hinreichend ist, wenn ein Kanal als Primärkanal deklariert wird und der oder die anderen Kanäle als Backup arbeiten. Hierbei ist es in der Praxis nie notwendig, zwischen den Kanälen schnell hin- und zurückzuschalten, da eine defekte Feldbuskomponente so lange defekt ist, bis sie repariert wird. Während dieser Zeit wird somit kein Rückschalten zu diesem Kanal erfolgen. Hierbei ist die typische Reparaturdauer ca. bei vier Stunden anzusiedeln. Komponenten, die nur sporadisch funktionieren sind für hochverfügbare Anlagen grundsätzlich nicht tragbar, so dass auch hier ein schnelles Hin- und Herschalten nicht notwendig ist. Die vorliegende Lösung hat weiterhin den Vorteil, dass azyklische Dienste, wie z.B. ein peripherer Alarm oder ein azyklisches Nutzdatentelegramm einen eindeutigen Transportweg bekommen und zwar in jedem Fall den Primärkanal.

Im Folgenden ist die Erfindung anhand der Figuren näher beschrieben und erläutert.
- Figur 1: zeigt einen schematischen Aufbau eines Kommunikati- onssystems mit Ringarchitektur,
- Figur 2: zeigt einen schematischen Aufbau eines Kommunikati- onssystems mit Sternarchitektur,
- Figur 3: zeigt die Logik, die als Basis für die Kommunikati- on der Kommunikationsteilnehmer dient.
- Figur 4: zeigt eine schematische Darstellung der Umschaltung zwischen den Kanälen des Kommunikationssystems,
- Figur 5: zeigt eine schematische Darstellung der Umschaltung zwischen den Kanälen des Kommunikationssystems bei Ausfall eines Senders,
- Figur 6: zeigt eine schematische Darstellung der Umschaltung der Kanäle des Kommunikationssystems inklusive Rückmeldung der Empfänger,
- Figur 7: zeigt eine schematische Darstellung der Verzögerung der Umschaltung von Backup- auf Primärkanal bei ei- nem Sender.
- Figur 8: zeigt eine schematische Darstellung der Verzögerung der Umschaltung von Backup- auf Primärkanal in ei- nem Empfänger.

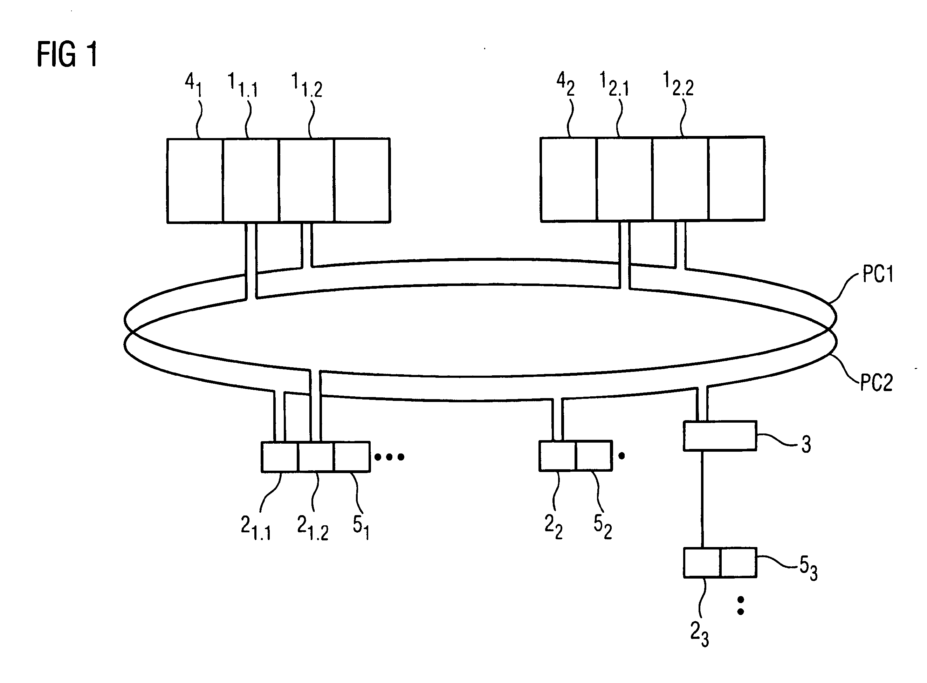

In Figur 1 ist beispielhaft die Netzwerkarchitektur eines redundanten Systems, insbesondere in der Automatisierung, dargestellt. In dem System sind die Kommunikationsteilnehmer 1,2 über redundant ausgelegte Kommunikationsverbindungen PC1, PC2 miteinander verbunden. Die Kommunikationsverbindungen sind hierbei ringförmig ausgebildet. Bei den Kommunikationsteilnehmern 1,2 kann es sich beispielsweise um Sender, wie Feldbus-Controller 1 handeln, die jeweils die Daten eines so genannten Hosts, beispielsweise einer CPU 4 über das Kommunikationssystem an Datenempfänger, beispielsweise Interface Module 2, die ihrerseits mit Feldgeräten 5 verbunden sind, übertragen. Hierbei können die einzelnen Sender und Empfänger jeweils redundant oder einfach ausgelegt sein. Im Rahmen der Architektur können weiterhin so genannte Switches 3 für eine gewünschte Verteilung der über das Kommunikationssystem gesendeten Daten vorhanden sein.

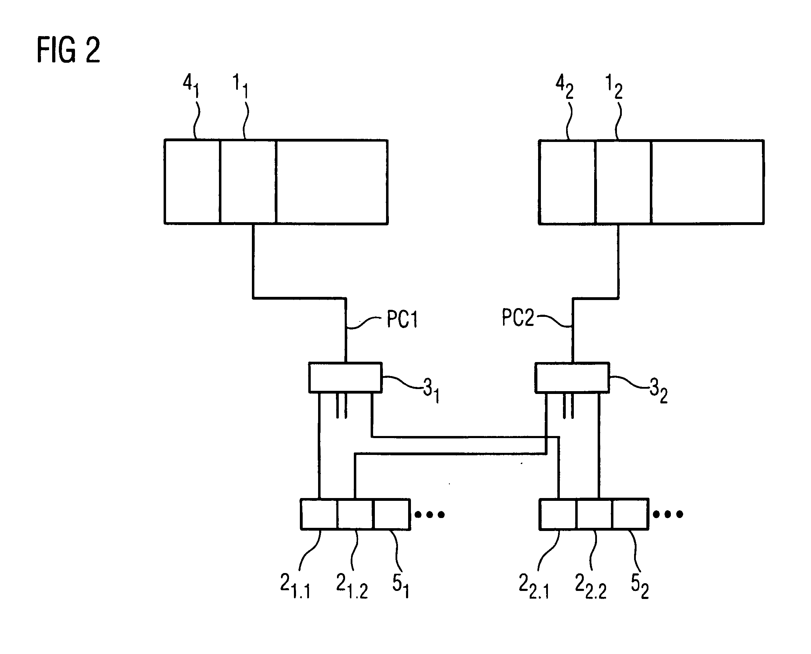

Figur 2 zeigt eine weitere mögliche Architektur eines entsprechenden Kommunikationssystems mit Kommunikationsteilnehmern 1,2. Die Kommunikationsverbindungen PC 1, PC 2 sind hierbei sternförmig ausgebildet. Hierbei sind beispielsweise die Sender von Datentelegrammen wie der so genannte Feldbus-Controller 1, die jeweils die Daten von einer CPU 4 in das Kommunikationssystem einspeisen. Die Sender 1 sind über Switches 3 mit den Empfängern, beispielsweise Interface Module 2, verbunden. Die Interface Module 2 versorgen die Feldgeräte 5 mit Daten aus dem Kommunikationssystem. Die Interface Module 2 ihrerseits können selber Daten von den Feldgeräten 5 empfangen und diese wieder über das Kommunikationssystem an die Steuerungen bzw. CPU 4 über die Feldbus-Controller 1 senden.

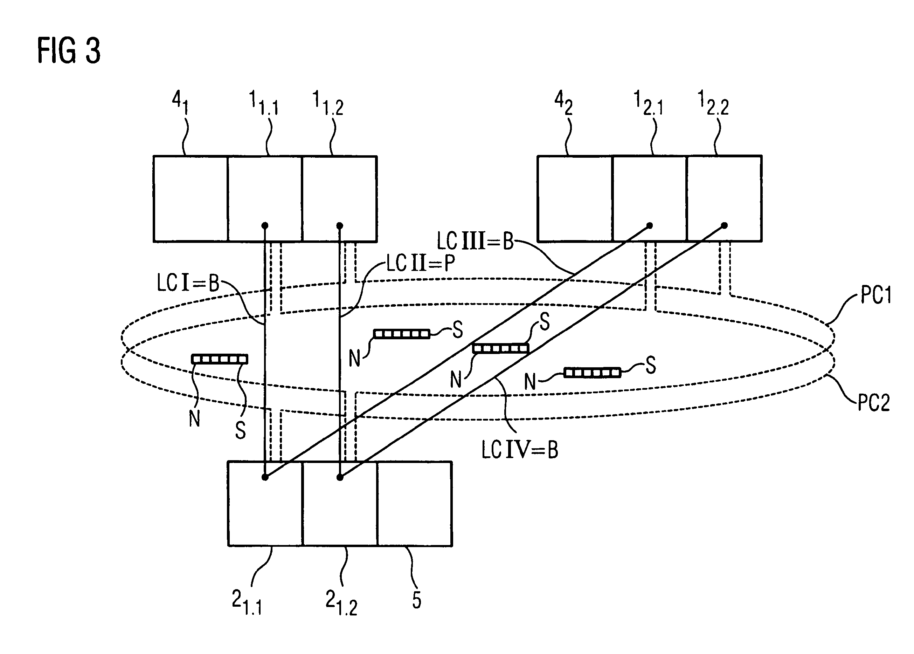

Fig 3 zeigt die Logik, die als Basis für die Kommunikation der Kommunikationsteilnehmer 1,2 dient. In dem gezeigten Ausführungsbeispiel wird von der Architektur wie sie in Fig 1 dargestellt ist ausgegangen. Die Sender 1_{1.1}, 1_{1.2}, 1_{2.1} und 1_{2.2} sind hierbei über logische Kommunikationskanäle LC I, LC II, LC III, LC IV, die redundant ausgelegt sind, mit den Empfängern 2_{1.1}, 2_{1.2} verbunden. Von den redundanten Kommunikationskanälen des Kommunikationssystems ist der Kanal LC II als Primärkanal P und die Kanäle LC I, LC III und LC IV sind als Backup-Kanäle B ausgewiesen.

Zur Kommunikation werden über die Kanäle Nutzdatentelegramme N von den Sendern, beispielsweise die Feldbus-Controller 1 an die Empfänger 2 gesendet. Die Nutzdatentelegramme N weisen neben den eigentlichen Nutzdaten eine Statusanzeige S auf, über die den beteiligten Kommunikationsteilnehmern 1,2 mitgeteilt wird, welcher Kanal Primärkanal P und welcher Kanal Backup-Kanal B ist. Die Statusinformation S kann auf einfache Weise an das Nutzdatentelegramm angehängt und von den beteiligten Kommunikationsteilnehmern ausgelesen werden.

Da die Zuweisung, ob ein Kanal für einen Empfänger Primärkanal oder Backupkanal ist ausschließlich über das Statusbit des jeweiligen Nutzdatentelegramms für den Empfänger erfolgt, ist es möglich, dass für jeden Empfänger bzw. jedes Device der Primärkanal auf einem anderen der logischen Kommunikationswege liegt. Alle logischen Kommunikationskanäle können für unterschiedliche Empfänger bzw. Devices Primär- oder Backup-kanal sein. In dem dargestellten Ausführungsbeispiel ist der Kanal LC II als Primärkanal P für die Datenübertragung genutzt, während die Kanäle LC I, LC III und LC IV als Backup-Kanäle B für die Datenübertragung fungieren. Der Status des jeweiligen Kanals wird auch in diesem Falle mittels eines Nutzdatentelegramms N den Kommunikationsteilnehmern 1,2 mitgeteilt, wobei das Nutzdatentelegramm N über eine Statusanzeige S verfügt.

Das in den Figuren 1, 2 und 3 grundsätzlich dargestellte Kommunikationssystem fungiert unabhängig von der Architektur seiner Kommunikationsverbindungen PC 1, PC 2 nach dem gleichen Prinzip. Der Kanal, welcher als Primärkanal P für die Datenübertragung fungieren soll, wird durch die beteiligten Kommunikationsteilnehmer selber als Primärkanal P definiert, indem ein Nutzdatentelegramm, welches von einem Kommunikationsteilnehmer 1,2 versendet wird, mit der entsprechenden Statusinformation S ausgestattet wird. Die Statusinformation S wird hierbei einfach an das Nutzdatentelegramm N angehängt. Bei der Statusinformation S kann es sich beispielsweise um ein Bit handeln. Wird das Bit auf 1 gesetzt, signalisiert das entsprechende Nutzdatentelegramm N, dass dieser Kanal von dem Empfänger 2 des Nutzdatentelegramms N als Primärkanal für die Kommunikation genutzt werden soll und dass somit diese Daten die aktuell gültigen Daten für die weitere Verwendung, beispielsweise an den Host 4 oder an die Feldgeräte 5 sind. Somit kann der Primärkanal für jeden Kommunikationsteilnehmer ein anderer sein. Desgleichen signalisiert ein derartiges Nutzdatentelegramm N mit der Statusinformation S, dass der Kanal der als Primärkanal P verwendet werden soll, ebenso den Empfängern der Nutzdatentelegramme, dass sie ihre aktuellen Nutzdaten über diesen Kanal versenden sollen.

Über den Backup-Kanal B können gleichzeitig zu Testzwecken Nutzdatentelegramme N versendet werden, diese haben dann im Rahmen des erfindungsgemäßen Kommunikationssystems jedoch einen anderen Status S, nämlich den, dass sie als Backup-Kanal B fungieren und dass die entsprechend über diesen Kanal empfangenen und gesendeten Daten nicht die gleiche Aktualität aufweisen wie die des Primärkanals, und somit nur bedingt verwendet werden können.

Die beschriebenen Ausführungsbeispiele unter Figur 1, 2 und 3 sind für ein Automatisierungssystem beschrieben. Ein entsprechendes Szenario lässt sich beispielsweise jedoch auch in anderen Überwachungssystemen denken. Beispielsweise können die Sender von Daten in einem sicherheitsgerichteten Überwachungssystem Steuerungseinheiten sein, welche Anweisungen an unterschiedliche Kameras erteilen, die auf Basis dieser Anweisungen unterschiedliche Ausschnitte in den Fokus nehmen oder sich in Bezug auf den Zoom-Faktor steuern lassen. Desgleichen kann für die Kommunikation von den sicherheitsgerichteten Kameras zu den entsprechenden Zentralstellen, an denen die Daten ausgewertet werden, eine redundante Datenübertragung nach dem oben dargestellten Beispiel realisiert werden. Die genannten Ausführungsbeispiele in einem Automatisierungssystem bzw. in einem sicherheitsgerichteten Überwachungssystem stellen nur mögliche Realisierungen der Erfindung dar. Jede weitere Architektur, bei der ein Kommunikationssystem sicherheitsrelevante Daten zwischen Sendern und Empfängern übertragen soll, kann nach dem gleichen Prinzip realisiert werden.

Ein im Rahmen einer Fail-Safe Anwendung existierendes Sicherheitsprotokoll wird durch die Implementierung der Erfindung nicht gestört, sondern vielmehr hochverfügbar gemacht. Dies garantiert die Verwirklichung einer Kombination von sicherheitsgerichteten und hochverfügbaren Automatisierungslösungen.

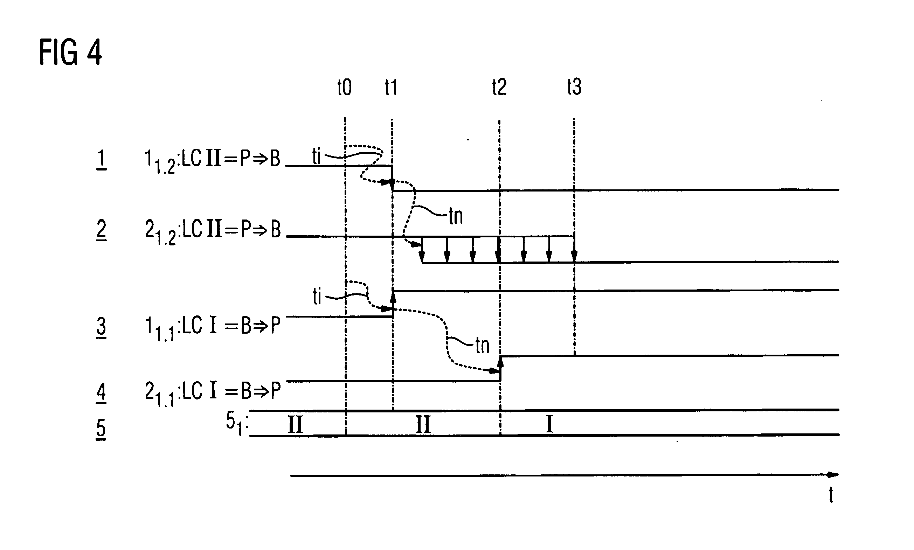

Figur 4 stellt schematisch das Prinzip der Umschaltung zwischen zwei Kommunikationskanälen LC I, LC II dar. Hierbei wird die Statusanzeige S des Nutzdatentelegramms N derart dargestellt, dass die waagerechten Linien, den Wert des Bits der Statusanzeige S, darstellen. Hierbei ist die oberste waagerechte Linie der Status S des Nutzdatentelegramms N, welches beispielsweise von einem Sender, in dem vorliegenden Fall vom Feldbus-Controller 1_{1.2} zyklisch gesendet wird. Zu Beginn sei der Kanal LC II, über den der Feldbus-Controller 1_{1.2} in Figur 3 sendet, Primärkanal P. Dies ist dadurch erkennbar, dass die vorherige (nicht gezeigte) Flanke des Status-Bits des Nutzdatentelegramms auf 1 gesetzt ist. Zum Zeitpunkt t₀ wird dann im Kommunikationssystem entweder ein Fehler erkannt oder es wird anderweitig eine Umschaltung der Kommunikationskanäle erzeugt. Vom Sender, dem Feldbus-Controller 1_{1.2} wird dann eine Information tᵢ erzeugt, welche zum Zeitpunkt t₁ von dem Sender, im vorliegenden Fall dem Feldbus-Controller versendet wird. Der Kanal LC II, der ursprünglich auf Primärkanalstatus gesetzt war, wird nunmehr durch das Versenden eines Nutzdatentelegramms N auf Backup-Kanal B geschaltet. Dies ist in Figur 4 in der ersten Zeile, die den Status des Telegramms darstellt, dadurch erkennbar, dass mittels Flanke zum Zeitpunkt t₁ der Status von 1 auf 0 gesetzt wird. Von dem Zeitpunkt t₁ ab sendet somit der Sender 1_{1.2} noch Daten über den Kanal LC II, wobei diese Daten jedoch lediglich Backupdaten darstellen.

In der 2. Zeile von Figur 4 ist die Reaktion des Empfängers 2_{1.2} auf das Versenden des Nutzdatentelegramms mit dem geänderten Statusbit, also dem Flankenwechsel und der darauffolgenden Kanalumschaltung dargestellt. tₙ ist die Zeit, die das vom Sender 1_{1.2} versendete Nutzdatentelegramm N benötigt, um beim Empfänger 2_{1.2} anzukommen. In dem Moment, zu dem der Empfänger 2_{1.2} das neue Nutzdatentelegramm mit der Statusänderung, die nunmehr kennzeichnet, dass Kanal LC II als Backup-Kanal fungieren soll, empfängt, wird vom Empfänger 2_{1.2} ebenfalls reagiert. Nachdem er das Nutzdatentelegramm empfangen hat, weiß der Empfänger, dass Kanal LC II jetzt auf Backup geschaltet ist. Je nach Laufzeit tₙ, d.h. nach der Zeit, die das Nutzdatentelegramm N benötigt, um vom Sender beim Empfänger anzukommen, wird der Empfänger über die Statusänderung informiert. Hierbei sind unterschiedliche Laufzeiten der Datentelegramme möglich, was durch die Vielzahl von Pfeilen, die den Flankenwechsel von 1 auf 0 markieren, dargestellt wird.

In Zeile 3 ist der Status des Senders 1_{1.1} dargestellt. Ursprünglich sendet der Sender über den Kanal LC I Nutzdatentelegramme N. Der Kanal LC I ist ursprünglich als Backup-Kanal B geschaltet. Dies ist an der tief gestellten Linie erkennbar. Zum Zeitpunkt t₀ empfängt der Sender 1_{1.1} dann die Information, dass die Umschaltung stattfinden soll. Der Sender benötigt intern eine gewisse Zeit tᵢ, um diese Information im nächsten Nutzdatentelegramm N zu verpacken und damit eine Statusänderung anzuzeigen. Zum Zeitpunkt t₁ wird dann das Statusbit im Nutzdatentelegramm von 0 auf 1 geändert und der Sender 1_{1.1} zeigt nunmehr durch Versenden eines Nutzdatentelegramms mit der entsprechenden Statusanzeige an, dass Kanal LC I auf Primärkanal geschaltet werden soll.

In Zeile 4 von Figur 4 ist das Verhalten des Empfängers 2_{1.1} dargestellt. Der Empfänger empfängt ursprünglich über Kanal LC I als Backup-Kanal B Nutzdatentelegramme. Hierbei ist das Statusbit auf 0 gesetzt. Zum Zeitpunkt t₂ empfängt der Empfänger 2_{1.1} vom Sender 1_{1.1} das Nutzdatentelegramm N mit der Information, dass die Daten über Kanal LC I als Primärkanal P gesendet werden. Dies ist an der Änderung des Statusbits von 0 nach 1 erkennbar. Hierbei ist ebenfalls wieder eine gewisse Datenlaufzeit tₙ verstrichen, die das Nutzdatentelegramm N für die Strecke vom Sender 1_{1.1} zum Empfänger 2_{1.1} benötigt.

In Zeile 5 von Figur 4 ist dargestellt, von welchem Kanal das Feldgerät 5 die Daten benutzt. Bis zum Zeitpunkt t₀, zu dem die Umschaltung stattgefunden hat, benutzt das Feldgerät die über Kanal LC II als Primärkanal erhaltenen Daten als für sich relevante Daten. Vom Zeitpunkt t₀ bis zum Zeitpunkt t₂ muss dieser Kanal als Primärkanal gehalten werden. Weiterhin benutzt somit das Feldgerät seine Daten von Kanal LC II. Zum Zeitpunkt X₂ wird an dem Empfängergerät 2_{1.1} die Umschaltung durchgeführt und von nun ab der Kanal LC II auf Backup-Kanal B und der Kanal I auf Primärkanal P geschaltet. Bis t₂ wird in dem entsprechenden Feldgerät die Information verwendet, die über den Kanal II empfangen wird.

In dem dargestellten Beispiel ist ab dem Zeitpunkt t₃ eine erneute Backup-Primary-Umschaltung möglich. Für den Fall, dass das Telegramm mit der negativen Primaryflanke vor t₂ ankommt, wird das System derart ausgebildet, dass die Zeit zwischen der Ankunft des Telegramms und t₂ durch eine parametrierte Haltezeit überwacht wird. Wenn diese parametrierbare Haltezeit abläuft schaltet der Empfänger seine Daten auf Ersatzwerte. Für den Fall, dass das Telegramm mit der negativen Primaryflanke nach t₂ ankommt, verzögert sich eine mögliche erneute Primary-Backup-Flanke, d.h. ein Zurückschalten des Primärkanals entsprechend. Durch die parametrierte Haltezeit wird zum einen sichergestellt, dass das Feldgerät die letzten Daten, die über den Primärkanal empfangenen worden sind, solange behält, bis klar ist, über welchen Kanal anschließend gesendet wird, und erst dann auf diesen Kanal umgeschaltet. Zum anderen werden bei Ablauf der Haltezeit die Daten auf Ersatzwerte eingestellt.

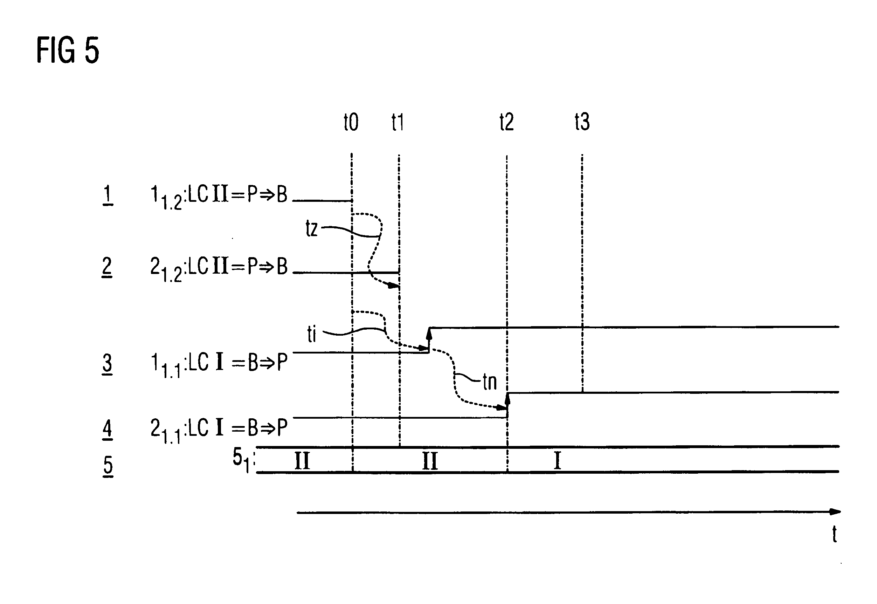

In Figur 5 ist ein ähnliches Szenario dargestellt, wobei in diesem Fall der Sender 1_{1.2}, der bisher über den Kanal LC II als Primärkanal gesendet hat, zum Zeitpunkt t₀ komplett ausfällt. Zum Zeitpunkt t₁ stellt der Empfänger 2_{1.2} fest, dass er kein Datentelegramm vom Sender 1_{1.2} bekommen hat wie erwartet. Diese Zeit nicht erfolgter Telegrammübermittlung ist durch TZ dargestellt. Das Sendegerät 1_{1.1}, der redundante Feldbus-Controller zum Sender 1_{1.2}, erkennt zu einem Zeitpunkt t₁, der nach t₀ liegt, dass sein redundanter Kommunikationsteilnehmer ausgefallen ist. Zu diesem Zeitpunkt steuert der Feldbus-Controller dann den Kanal LC I von Backup- auf Primärkanal P. Dies erfolgt, wie in Figur 5 dargestellt, durch das Setzen des Bits von 0 auf 1, was dann im Telegramm zu einer entsprechenden Primärkanalflanke führt. Das Empfangsgerät 2_{1.1}, welches anschließend vom Sender bzw. Feldbus-Controller 1_{1.1} das Nutzdatentelegramm nach der Zeit tₙ empfängt, schaltet nach Empfang des Nutzdatentelegramms ebenfalls den Kanal LC I von Backup- nach Primärkanal. Im vorliegenden Fall sind die Daten, die vom Feldgerät 5 verwendet werden, ursprünglich vom Kanal LC II, welcher ursprünglich Primärkanal P war. Nach Ausfall des Feldbus-Controllers 1_{1.2} hält das Feldgerät 5₁ die letztempfangenen Daten des Primärkanals LC II so lange, bis es eine neue Information vom neuen Empfänger, dem Interface Modul 2_{1.1}, bekommt, dass nunmehr der Kanal LC I als Primärkanal fungiert und die über diesen Kanal empfangenen Daten benutzt werden sollen.

In diesem Fall beginnt die Haltezeit mit t₁. Falls t₂ nach Ablauf der parametrierten Haltezeit liegt, werden mit Ablauf der Haltezeit die Daten auf Ersatzwerte eingestellt. Sobald der Flankenwechsel (t₂) eintrifft werden die Daten des Kanals I benutzt.

Insgesamt wird hier also der Gegenstand der Erfindung, dass eine einfache Statusanzeige, beispielsweise ein Bit, über die Nutzdatentelegramme N versendet wird, auf einfache Weise realisiert. Es werden hierbei immer die Daten als gültige Daten angenommen, die von dem Kanal mit dem zuletzt erfolgen Flankenwechsel des Statusbits von Backup auf Primär empfangen wurden. Durch den Einbau der Haltezeit wird sichergestellt, dass die Feldgeräte immer mit den zuletzt gültigen Nutzdaten versorgt sind. Wird eine definierte Zeit überschritten und es erfolgt keine korrekte Umschaltung zwischen den Kanälen, so gehen alle beteiligten Kommunikationsteilnehmer in einen definierten Ersatzzustand über. Dadurch wird sichergestellt dass keine undefinierten Zustände entstehen.

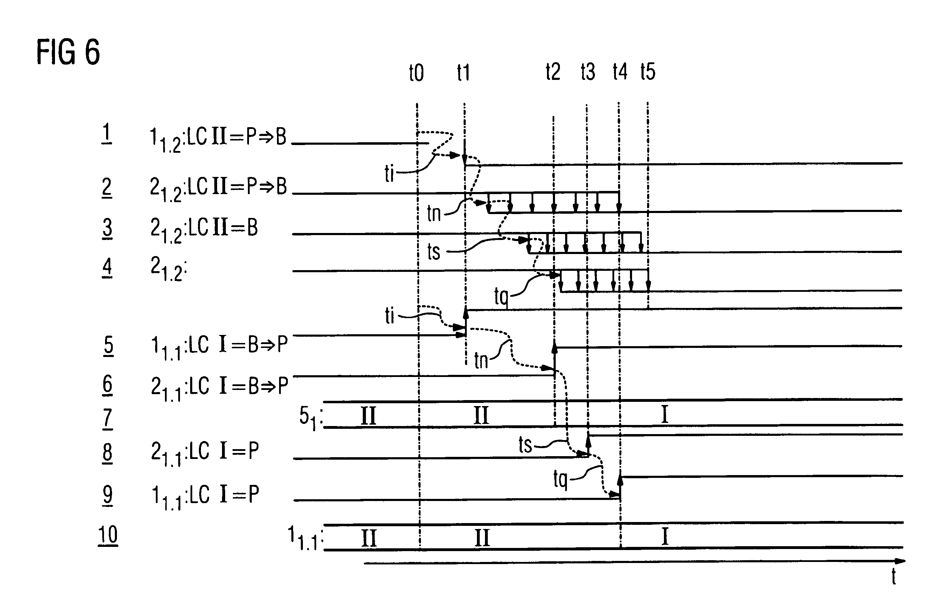

Figur 6 stellt das gleiche Szenario wie in Figur 4 dar. Zusätzlich zu der Visualisierung der Flanken des Senders 1_{1.2} und des Empfängers 2_{1.2}, die bei der Umschaltung von Primärkanal auf Backup-Kanal umschalten, sind in den Zeilen 3 und 4 die entsprechenden Reaktionen der beiden Beteiligten auf die Rückmeldung bzw. Meldung angezeigt. t_{S} in Zeile 3 gibt den Zeitraum, der vom Empfänger 2_{1.2} benötigt wird, um nach Empfang des Nutzdatentelegramms mit der Information über die Kanalumschaltung seinerseits wieder ein eigenes Telegramm, beispielsweise mit Informationen aus den Feldgeräten, zusammenzustellen und anschließend dieses Telegramm mit der geänderten Statusanzeige, nämlich dass von Primärkanal P auf Backup-Kanal B umgeschaltet wurde, an seinen Kommunikationspartner, beispielsweise den ursprünglichen Sender 1_{1.2}, also den Feldbus-Controller, zu senden.

t_{Q} in Zeile 4 gibt anschließend den Zeitraum an, den das Datentelegramm benötigt, um von dem neuen Sender, dem Interface Modul 2_{1.2}, an den ursprünglichen Sender und jetzigen Empfänger, den Feldbus-Controller 1_{1.2}, zu gelangen. Der ursprüngliche Sender 1_{1.2} erhält somit vom ursprünglichen Empfänger 2_{1.2} eine Quittung darüber, dass das Datentelegramm empfangen wurde und dass die entsprechende Kanalumschaltung des Kanals LC II von Primärkanal P auf Backup-Kanal B erfolgt ist.

In den Zeilen 5 und 6 sind die entsprechenden Reaktionen der redundanten Kommunikationsteilnehmer dargestellt wie auch in Figur 4. Zeile 5 zeigt hierbei die Umschaltung des Kommunikationskanals LC I von Backup-Kanal B auf Primärkanal P durch den Sender 1_{1.1}. Zum Zeitpunkt t₁ wird ein entsprechendes Nutzdatentelegramm N mit der Statusinformation über den Wechsel gesendet. Zum Zeitpunkt t₂ erhält der Empfänger 2_{1.1} die Information mit dem Nutzdatentelegramm, welches eine Zeit tₙ für die Überwindung der Strecke benötigt hat. Zum Zeitpunkt t₂ stellt dann der Empfänger 2_{1.1} ebenfalls von Backup-Kanal B auf Primärkanal P für Kanal LC I um.

Das Feldgerät 5₁ muss wie in den vorherigen Szenarien so lange die Daten, die über den ursprünglichen Primärkanal LC II erhalten wurden, halten, bis es von dem Interface Modul 2_{1.1} zum Zeitpunkt t₂ die neuen Nutzdaten empfängt, welche gleichzeitig die Statusinformation über den Primärkanal P aufweisen. Zum Zeitpunkt t₃ sendet das Interface Modul 2_{1.1}, die Information, dass er nunmehr Kanal LC I als Primärkanal für die Nutzdatenübertragung verwendet. Hierfür hat das Interface Modul ebenfalls eine gewisse Zeit, t_{S}, benötigt, um ein neues Nutzdatentelegramm zusammenzustellen und mit den Daten vom Feldgerät über das Kommunikationssystem zu versenden. Zum Zeitpunkt t₄ erhält der zugehörige Feldbus-Controller 1_{1.1}, die Daten vom Interface Modul, also die neuen Nutzdaten und damit die Umschaltquittung, dass nunmehr Kanal LC I als Primärkanal verwendet wird.

In Zeile 10 ist angegeben, wie beispielsweise eine CPU, also der Host, mit dem entsprechend Figur 3 ursprünglich kommuniziert wurde, in dem System sich in Bezug auf die Datennutzung verhalten soll. Ursprünglich werden die Daten vom Kanal LC II als Primärdaten anerkannt. Der Kanal LC II wird solange als Primärkanal P von dem Host 4₁ gehalten, bis der Host bzw. die CPU das Signal vom Feldbus-Controller 1_{1.1} bekommt, dass nunmehr die Nutzdatentelegramme über den Kanal I als Primärkanal P versendet werden.

Durch das in den Figuren dargestellte Verfahren wird zu jedem Zeitpunkt sichergestellt, dass alle beteiligten Kommunikationsteilnehmer die aktuelle relevante Information über das Kommunikationssystem zur Verfügung gestellt bekommen und dass zu jedem Zeitpunkt eindeutig klar ist, welche Daten als Nutzdaten von den beteiligten Kommunikationsteilnehmern verwendet werden müssen. Insbesondere die Rückkopplung durch Quittungstelegramme ermöglicht es, den beteiligten Kommunikationsteilnehmern genau einen Zeitpunkt zu definieren, zu dem sie dann für die Nutzung der über das Kommunikationssystem verteilten Daten von dem einen Kanal auf den anderen Kanal umschalten müssen bzw. auch, wie lange sie die zuletzt über den aktuellen gültigen Primärkanal P gesendeten Nutzdatentelegramm behalten müssen.

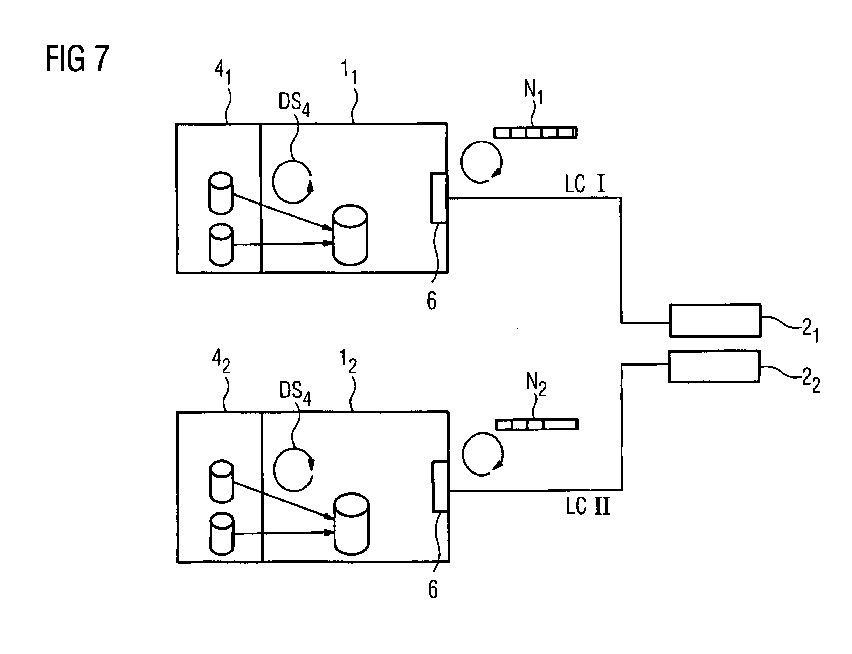

In Figur 7 ist noch einmal dargestellt, wie die zyklische Datenbereitstellung und Datenversendung in einem entsprechenden erfindungsgemäßen System beispielhaft funktioniert. 4₁ und 4₂ stellen so genannte Hosts, beispielsweise eine redundante CPU, dar. 1₁ und 1₂ sind Feldbus-Controller, die die Nutzdaten aus der redundanten CPU über einen zyklischen Prozess sammeln und für die Verschickung über das System vorbereiten. Die Sammlung der Daten erfordert einen gewissen Zeitraum DS₄. Die Daten werden anschließend über die Schnittstellen 6 versendet an die Interface Module 2₁ und 2₂. Ursprünglich ist der Kanal LC II Primärkanal P für die Versendung von Daten. Von den Feldbus-Controllern 1₁ und 1₂ werden die Daten anschließend zyklisch ebenfalls wieder über das System versendet. Damit sichergestellt wird, dass zu jedem Zeitpunkt die richtigen Daten für alle Beteiligten vorhanden sind, wechselt der Feldbus-Controller 1₂ sofort von Primärkanal auf Backup-Kanal, wenn ein Fehler auftritt oder eine Umschaltung angefordert wird. Der Feldbus-Controller 1₁ muss mit der Umschaltung von Backup-Kanal B auf Primärkanal P warten, bis ein vollständiger Datensammelzyklus DS₄ intern abgeschlossen wird und er sein zugehöriges Nutzdatentelegramm N₁ über das Kommunikationssystem versenden kann. Hierdurch wird sichergestellt, dass es in keinem Fall zu einem Datenverlust oder Umschaltstoß kommen kann.

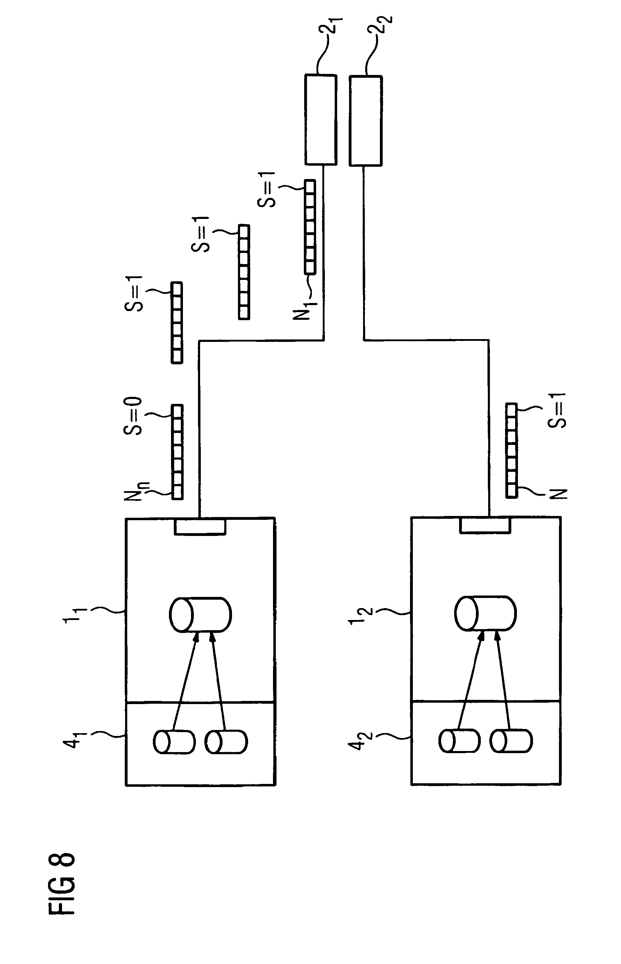

Figur 8 stellt den umgekehrten Fall dar, dass die Information von den Controllern 1₁ und 1₂ unabhängig von ihrem internen Zyklus kontinuierlich in Form von Nutzdatentelegrammen N₁..Nₙ an die Empfänger 2₁ und 2₂ gesendet wird. Die Empfänger sammeln dann über den Kanal, der Primary ist, so lange, bis sie ein Nutzdatentelegramm mit einem Flankenwechsel empfangen. Dieses Telegramm wird nach Auftritt eines Fehlers vom Sender, dem Controller, genau dann gesendet, wenn er die letzte Information eines Datenabfragezyklus erhalten hat. Anschließend nutzen die Empfänger dann die Daten, die über den Kanal mit dem letzten Flankenwechsel von Backup nach Primary empfangen werden.

## Patentansprüche

1. Kommunikationssystem zur zuverlässigen Kommunikation zwischen Kommunikationsteilnehmern (1,2), umfassend einen ersten Kommunikationsteilnehmer (1) und einen zweiten Kommunikationsteilnehmer (2), wobei zumindest einer als Empfänger ausgebildet ist,
• mit mindestens einer Kommunikationsverbindung (PC1, PC2) zwischen den Kommunikationsteilnehmern (1,2), wobei die Kommunikationsverbindung (PC1, PC2) über mindestens zwei Kanäle (I,II) zum Übertragen von Nutzdatentelegrammen (N) verfügt, wobei zu jedem Zeitpunkt (t, t0, t1, t2, t3) geklärt ist welcher Kanal (I,II) ein Primärkanal (P) und welcher Kanal ein Backupkanal (B) ist, nur ein Kanal (I,II) als Primärkanal (P) für die Kommunikation dient und wobei der andere Kanal (I,II) als Backupkanal (B) vorgesehen ist,
**gekennzeichnet durch**
• eine Statusanzeige (S) im Nutzdatentelegramm (N) zur Anzeige der Information, welcher Kanal (I,II) zu einem Zeitpunkt (t, t0, t1, t2, t3) Primärkanal (P) oder Backupkanal (B) ist,
• ein Auslesemittel zum Auslesen der Statusanzeige (S) zum Annehmen des Kanals (I,II) als Primärkanal (P) bei dem mit Empfang der Nutzdatentelegramme (N) der letzte Statuswechsel von Backupkanal (B) auf Primärkanal (P) **durch** den Kommunikationsteilnehmer (1,2) erkannt wurde.

2. Kommunikationssystem nach Anspruch 1, wobei als Statusanzeige (S) im Nutzdatentelegramm (N) ein Bit vorgesehen ist.

3. Kommunikationssystem nach Anspruch 2, wobei 1 den Status Primärkanal (P) und 0 den Status Backupkanal (B) anzeigt.

4. Kommunikationssystem nach einem der vorhergehenden Ansprüche, bei dem alle Kommunikationsteilnehmer (1,2) zum Senden und Empfangen von Nutzdatentelegrammen (N) vorgesehen sind.

5. Kommunikationssystem nach einem der vorhergehenden Ansprüche, wobei der Sender eines Nutzdatentelegramms (N) daran angepasst ist die Änderung des Status vom Backupkanal (B) zum Primärkanal (P) erst erfolgen zu lassen, wenn der Sender sein folgendes Nutzdatentelegramm (N) komplett aktualisiert hat.

6. Kommunikationssystem nach einem der vorhergehenden Ansprüche, wobei die Kommunikationsteilnehmer (1,2) zur Speicherung des letzten Nutzdatentelegramms (N), das über einen ehemaligen Primärkanal (P) empfangen wurde, vorgesehen sind, wenn alle Kanäle den Status Backupkanal (B) aufweisen.

7. Kommunikationssystem nach Anspruch 6, bei dem für die Speicherung der Nutzdatentelegramme (N) eine vordefinierte Zeit vorgesehen ist und bei dem nach Ablauf der Zeit eine Einstellung der Nutzdaten auf Ersatzwerte der Kommunikationsteilnehmer vorgesehen ist.

8. Kommunikationssystem nach einem der vorhergehenden Ansprüche, bei dem die Kommunikationsteilnehmer (1,2) mindestens zweifach redundant ausgelegt sind.

9. Kommunikationssystem nach einem der vorhergehenden Ansprüche, bei dem ein redundant ausgebildeter Sender eines Nutzdatentelegramms (N) derart ausgebildet ist, dass er den Ausfall seines redundanten Kommunikationsteilnehmers (1,2) erkennt und den Status seines Kanals auf Primärkanal (P) umschaltet.

10. Kommunikationssystem nach einem der vorhergehenden Ansprüche, bei dem der Empfänger eines Nutzdatentelegramms (N) derart ausgebildet ist, dass er den Ausfall des Empfangs von Nutzdatentelegrammen (N) erkennt und den Status des empfangsseitigen Primärkanals (P) sendeseitig von Primarkanal (P) auf Backupkanal (B) umschaltet.

11. Verfahren zur zuverlässigen Kommunikation zwischen Kommunikationsteilnehmern (1,2),
• bei dem Nutzdatentelegramme (N) zwischen den Kommunikationsteilnehmern (1,2) über mindestens zwei Kanäle (I,II) übertragen werden, wobei zu jedem Zeitpunkt (t, t0, t1, t2, t3) nur ein Kanal (I,II) als Primärkanal (P) für die Kommunikation dient und wobei der andere Kanal (I,II) als Backupkanal (B) verwendet wird,
**dadurch gekennzeichnet, dass**
• die Information, welcher Kanal (I,II) zu einem Zeitpunkt (t, t0, t1, t2, t3) Primärkanal (P) oder Backupkanal (B) ist mittels einer Statusanzeige (S) im Nutzdatentelegramm (N) den beteiligten Kommunikationsteilnehmer (1,2) mitgeteilt wird, wobei von den Kommunikationsteilnehmern (1,2) der Kanal (I,II) als Primärkanal (P) angenommen wird, bei dem mit Empfang der Nutzdatentelegramme (T) der letzte Statuswechsel von Backupkanal (B) auf Primärkanal (P) durch den Kommunikationsteilnehmer (1,2) erkannt wurde.

12. Verfahren nach Anspruch 11, bei dem ein Bit im Nutzdatentelegramm (N) als Statusanzeige verwendet wird.

13. Verfahren nach Anspruch 12, bei dem 1 den Status Primärkanal (P) und 0 den Status Backupkanal (B) anzeigt.

14. Verfahren nach einem der Ansprüche 11 bis 13, bei dem alle Kommunikationsteilnehmer (1,2) Nutzdatentelegramme senden und empfangen.

15. Verfahren nach einem der Ansprüche 11 bis 14, bei dem bei einem Sender eines Nutzdatentelegramms (N) die Änderung des Status vom Backupkanal (B) zum Primärkanal (P) erst vorgenommen wird, wenn der Sender sein folgendes Nutzdatentelegramm (N) komplett aktualisiert hat.

16. Verfahren nach einem der Ansprüche 11 bis 15, bei dem die Kommunikationsteilnehmer (1,2) das letzte Nutzdatentelegramm (N), das über einen ehemaligen Primärkanal (P)empfangen wurde, speichern, wenn alle Kanäle den Status Backupkanal (B) aufweisen.

17. Verfahren nach Anspruch 16, bei dem die Nutzdatentelegramme für eine vordefinierte Zeit gespeichert werden und bei dem nach Ablauf der Zeit eine Einstellung der Nutzdaten auf Ersatzwerte der Kommunikationsteilnehmer (1,2) erfolgt.

18. Verfahren nach einem der Ansprüche 11 bis 17, bei dem die Kommunikationsteilnehmer (1,2) mindestens zweifach redundant ausgelegt werden.

19. Verfahren nach einem der Ansprüche 11 bis 18, bei dem ein redundant ausgebildeter Sender eines Nutzdatentelegramms den Ausfall seines redundanten Kommunikationsteilnehmers (1,2) erkennt und den Status seines Kanals auf Primärkanal (P) umschaltet.

20. Verfahren nach einem der Ansprüche 11 bis 19, bei dem ein Empfänger eines Nutzdatentelegramms den Ausfall des Empfangs von Nutzdatentelegrammen erkennt und den Status des empfangsseitigen Primärkanals (P) sendeseitig von Primarkanal (P) auf Backupkanal (B) umschaltet.

21. Verfahren nach einem der Ansprüche 11 bis 20, bei dem für die Kommunikationsteilnehmer (1,2) Komponenten eines sicherheitsgerichteten Automatisierungssystems eingesetzt werden.

## Claims

1. Communication system for reliable communication between communication stations (1,2), comprising a first communication station (1) and a second communication station (2), with at least one being embodied as a receiver,
• comprising at least one communication connection (PC1, PC2) between the communication stations (1, 2), wherein the communication connection (PC1, PC2) features at least two channels (I,II) for transmitting payload data telegrams (N), wherein it is clarified at any given time point (t, t0, t1, t2, t3) which channel (I, II) is a primary channel (P) and which channel is a backup channel (B), only one channel (I, II) acts as primary channel (P) for the communication and wherein the other channel (I, II) is provided as a backup channel (B),
**characterised by**
• a status indicator (S) in the payload data telegram (N) for the indication of information concerning which channel (I, II) is primary channel (P) or backup channel (B) at a given time point (t, t0, t1, t2, t3),
• a read-out means for reading out the status indicator (S) to adopt the channel (I, II) as primary channel (P), during receipt of the payload data telegrams (N), the most recent status change from backup channel (B) to primary channel (P) was detected by the communication stations (1, 2).

2. Communication system according to claim 1, wherein one bit is provided as a status indicator (S) in the payload data telegram (N).

3. Communication system according to claim 2, wherein 1 indicates the status primary channel (P) and 0 indicates the status backup channel (B).

4. Communication system according to one of the preceding claims, in which all communication stations (1, 2) are equipped for sending and receiving payload data telegrams (N).

5. Communication system according to one of the preceding claims, wherein the sender of a payload data telegram (N) is adjusted to allow the change of status from the backup channel (B) to the primary channel (P) to take place if the sender has completely updated its following payload data telegram (N).

6. Communication system according to one of the preceding claims, wherein the communication stations (1, 2) are equipped for storing the most recent payload data telegram (N) that was received via a former primary channel (P), if all channels have the status backup channel (B).

7. Communication system according to claim 6, in which a predefined time is provided for the storage of the payload data telegrams (N), and an adjustment of the payload data to replacement values of the communication station is provided after expiry of said time.

8. Communication system according to one of the preceding claims, wherein the communication stations (1, 2) are redundantly arranged such that they are at least duplicated.

9. Communication system according to one of the preceding claims, wherein a redundantly configured sender of a payload data telegram (N) is configured in such a way that it detects the failure of its redundant communication station (1, 2) and switches the status of its channel to primary channel (P).

10. Communication system according to one of the preceding claims, wherein the recipient of a payload data telegram (N) is configured in such a way that it detects the failure of the receipt of payload data telegrams (N) and switches the status of the receive-side primary channel (P) from primary channel (P) to backup channel (B) on the sending side.

11. Method for reliable communication between communication stations (1,2),
• in which payload data telegrams (N) are transmitted between the communication stations (1, 2) via at least two channels (I,II), wherein only one channel (I, II) acts as primary channel (P) for the communication at any time point (t, t0, t1, t2, t3) and wherein the other channel (I, II) is used as backup channel (B),
**characterised in that**
• the information concerning which channel (I, II) is primary channel (P) or backup channel (B) at a given time point (t, t0, t1, t2, t3) is indicated to the participating communication station (1, 2) by means of a status indicator (S) in the payload data telegram (N), wherein the communication stations (1,2) adopt as primary channel (P) that channel (I, II) for which, during receipt of the payload data telegrams (T), the most recent status change from backup channel (B) to primary channel (P) was detected by the communication stations (1, 2).

12. Method according to claim 11, in which one bit in the payload data telegram (N) is used as a status indicator.

13. Method according to claim 12, in which 1 indicates the status primary channel (P) and 0 indicates the status backup channel (B).

14. Method according to one of claims 11 to 13, in which all communication stations (1, 2) send and receive payload data telegrams.

15. Method according to one of claims 11 to 14, in which in the case of a sender of a payload data telegram (N), the change of the status from the backup channel (B) to the primary channel (P) is performed if the sender has completely updated its following payload data telegram (N).

16. Method according to one of the claims 11 to 15, in which the communication stations (1, 2) store the most recent payload data telegram (N) that was received via a previous primary channel (P), if all channels have the status backup channel (B).

17. Method according to claim 16, in which the payload data telegrams are stored for a predefined time and an adjustment of the payload data to replacement values of the communication subscriber (1, 2) takes place after expiry of said time.

18. Method according to one of claims 11 to 17, in which the communication stations (1, 2) are redundantly arranged such that they are at least duplicated.

19. Method according to one of claims 11 to 18, in which a redundantly configured sender of a payload data telegram detects the failure of its redundant communication station (1, 2) and switches the status of its channel to primary channel (P).

20. Method according to one of claims 11 to 19, in which a recipient of a payload data telegram detects the failure of the receipt of payload data telegrams and switches the status of the receive-side primary channel (P) from primary channel (P) to backup channel (B) on the sending side.

21. Method according to one of claims 11 to 20, in which the communication stations (1, 2) are components of a security-oriented automation system.

## Revendications

1. Système de communication fiable entre des abonnés ( 1, 2 ) de communication, comprenant un premier abonné ( 1 ) de communication et un deuxième abonné ( 2 ) de communication, l'un au moins étant constitué en récepteur,
• comprenant au moins une liaison ( PC1, PC2 ) de communication entre les abonnés ( 1, 2) de communication, la liaison ( PC1, PC2 ) de communication disposant d'au moins deux canaux ( I, II ) de transmission de télégrammes ( N ) de données utiles, dans lequel à chaque instant ( t, t0, t1, t2, t3 ) il est précisé le canal ( I, II ) qui est un canal ( P ) primaire et le canal qui est canal ( B ) de secours, seul un canal ( I, II ) servant de canal ( P ) primaire pour la communication, tandis que l'autre canal ( I, II ) est prévu comme canal ( B ) de secours,
**caractérisé par**
• une indication ( S ) de statut dans le télégramme ( N ) de données utiles pour indiquer l'information sur le point de savoir le canal ( I, II ) qui, à un instant ( t, t0, t1, t2, t3 ), est le canal ( P ) primaire ou le canal ( B ) de secours,
• un moyen de lecture de l'indication ( S ) de statut pour adopter, comme canal ( P ) primaire le canal ( I, II ) dans lequel, par la réception des télégrammes ( N ) de données utiles, le dernier changement de statut du canal ( B ) de secours au canal ( P ) primaire a été reconnu par l'abonné ( I, II ) de communication.

2. Système de communication suivant la revendication 1, dans lequel il est prévu un bit comme indication ( S ) de statut dans le télégramme ( N ) de données utiles.

3. Système de communication suivant la revendication 2, dans lequel 1 indique le statut canal ( P ) primaire et 0 le statut canal ( B ) de secours.

4. Système de communication suivant l'une des revendications précédentes, dans lequel tous les participants ( I, II ) de communication sont prévus pour émettre et recevoir des télégrammes ( N ) de données utiles.

5. Système de communication suivant l'une des revendications précédentes, dans lequel l'émetteur d'un télégramme ( N ) de données utiles est adapté pour ne laisser effectuer la modification du statut du canal ( B ) de secours au canal ( P ) primaire que si l'émetteur à complètement mis à jour son télégramme ( N ) de données utiles suivant.

6. Système de communication suivant l'une des revendications précédentes, dans lequel les abonnés ( 1, 2 ) de communication sont prévus pour mémoriser le dernier télégramme ( N ) de données utiles qui a été reçu par un canal ( P ) primaire précédent, si tous les canaux ont le statut canal ( B ) de secours.

7. Système de communication suivant la revendication 6, dans lequel, pour la mémorisation des télégrammes ( N ) de données utiles, il est prévu une durée définie à l'avance et dans lequel, après l'expiration de la durée, il est prévu un réglage des données utiles sur des valeurs de remplacement des abonnés de communication.

8. Système de communication suivant l'une des revendications précédentes, dans lequel les abonnés ( 1, 2 ) de communication sont conçus redondants au moins deux fois.

9. Système de communication suivant l'une des revendications précédentes, dans lequel un émetteur redondant d'un télégramme ( N ) de données utiles est constitué de manière à reconnaître la défaillance de son abonné ( 1, 2 ) de communication redondant et à faire passer le statut de son canal sur canal ( P ) primaire.

10. Système de communication suivant l'une des revendications précédentes, dans lequel le récepteur d'un télégramme ( N ) de données utiles est constitué de manière à reconnaître la défaillance de télégrammes ( N ) de données utiles et à faire passer le statut du canal ( P ) primaire côté réception côté émission du canal ( P ) primaire au canal ( B ) de secours.

11. Procédé de communication fiable entre des abonnés ( 1, 2 ) de communication, dans lequel
• on transmet des télégrammes ( T ) de données utiles entre les participants ( 1, 2 ) de communication par au moins deux canaux ( I, II ) en se servant à chaque instant ( t, t0, t1, t2, t3 ) de seulement un canal ( 1, 2 ) comme canal ( P ) principal pour la communication, tandis que l'autre canal ( I, II ) est utilisé comme canal ( B ) de secours,
• on fait part aux abonnés ( 1, 2 ) de communication participants de l'information sur le point de savoir le canal ( I, II ) qui, à un instant ( t, t0, t1, t2, t3 ), est le canal ( P ) primaire ou le canal ( B ) de secours, au moyen d'une indication ( S ) de statut dans le télégramme ( N ) de données utiles, les abonnées ( 1, 2 ) de communication adoptant comme canal ( P ) primaire le canal ( I, II ) dans lequel, à la réception des télégrammes ( T ) de données utiles, le dernier changement de statut du canal ( B ) de secours au canal ( P ) primaire a été reconnu par les abonnés ( 1, 2 ) de communication.

12. Procédé suivant la revendication 11, dans lequel on utilise un bit dans le télégramme ( N ) de données utiles comme indication de statut.

13. Procédé suivant la revendication 12, dans lequel 1 indique le statut canal ( P ) primaire et 0 le statut canal ( B ) de secours.

14. Procédé suivant l'une des revendications 11 à 13, dans lequel tous les abonnés ( 1, 2 ) de communication émettent et reçoivent des télégramme de données utiles.

15. Procédé suivant l'une des revendications 11 à 14, dans lequel, pour un récepteur d'un télégramme ( N ) de données utiles, la modification du statut de canal ( B ) de secours au canal ( P ) primaire ne s'effectue que si l'émetteur a mis à jour complètement son télégramme ( N ) de données utiles suivant.

16. Procédé suivant l'une des revendications 11 à 15, dans lequel les abonnés ( 1, 2 ) de communication mémorisent le dernier télégramme ( N ) de données utiles, qui a été reçu par un canal ( P ) primaire précédent, lorsque tous les canaux ont le statut canal ( B ) de secours.

17. Procédé suivant la revendication 16, dans lequel on mémorise les télégrammes de données utiles pendant une durée définie à l'avance et dans lequel, après expiration de la durée, on effectue un réglage des donnée utile sur des valeurs de remplacement des abonnées ( 1, 2 ) de communication.

18. Procédé suivant l'une des revendications 11 à 17, dans lequel les abonnés ( 1, 2 ) de communication sont conçus redondants au moins deux fois.

19. Procédé suivant l'une des revendications 11 à 18, dans lequel un émetteur redondant d'un télégramme de données utiles reconnaît la défaillance de son abonné ( 1, 2 ) de communication redondant et fait passer le statut de son canal sur canal ( P ) primaire.

20. Procédé suivant l'une des revendications 11 à 19, dans lequel un récepteur d'un télégramme de données utiles reconnaît la défaillance de la réception de télégrammes de données utiles et fait passer le statut du canal ( P ) primaire côté réception côté émission du canal ( P ) primaire au canal ( B ) de secours.

21. Procédé suivant l'une des revendications 11 à 20, dans lequel les abonnés ( 1, 2 ) de communication utilisent des composants d'un système d'automatisation de sécurité.
